# FASCICULE DE BREVET EUROPEEN

(11) **EP 2 792 550 B1**
(45) Date de publication et mention de la délivrance du brevet: **09.11.2016**
(21) Numéro de dépôt: 14164880.8
(22) Date de dépôt: 16.04.2014
(51) Int. Cl.: B60R 13/08, B62D 25/14, B60R 21/04, B29C 45/14, G10K 11/162, B29C 69/02

(54) **Panneau insonorisant de tablier de véhicule automobile**
Schalldämmplatte für die Spritzwand eines Kraftfahrzeugs
Soundproofing panel for the firewall of a motor vehicle

(30) Priorité: 17.04.2013 FR 1353504
(43) Date de publication de la demande: 22.10.2014
(73) Titulaire: CENTRE D'ETUDE ET DE RECHERCHE POUR L'AUTOMOBILE (CERA), 51100 Reims (FR)
(72) Inventeur: Crignon, Guillaume, 51500 Sillery (FR); Hurson, Stéphane, 51140 Jonchery sur Vesle (FR)
(74) Mandataire: Sayettat, Julien Christian

(56) Documents cités:
- EP-A1- 2 114 729
- EP-A2- 0 210 102
- WO-A1-2012/119654
- FR-A1- 2 894 910
- FR-A1- 2 908 550
- FR-A1- 2 979 308

## Description

L'invention concerne un panneau insonorisant de tablier de véhicule automobile, un procédé de réalisation d'un tel panneau et une architecture d'une zone de tablier comprenant un tel panneau.

Il est connu par exemple du document EP 2 114 729 de réaliser un panneau insonorisant de tablier de véhicule automobile, ledit panneau comprenant :
- une coque supérieure à base d'une couche de feutre de masse surfacique sensiblement homogène, ledit feutre comprenant des fibres de structure liées par un liant activable à chaud, ladite coque étant thermoformée,
- une couche inférieure étanche à base de matériau élastomère thermoplastique, ladite couche étant disposée sensiblement bord à bord contre ladite coque,
- une couche de ressort à base de mousse élastiquement compressible surmoulant d'une part l'envers de ladite coque, en la pénétrant partiellement de manière à former une croûte d'interface étanche, et d'autre part l'envers de ladite couche étanche.

Avec un tel agencement, on dispose d'un panneau présentant en partie supérieure des propriétés d'isolation acoustique, du fait de la présence de la croûte étanche liée à la coque supérieure et disposée sur la couche de ressort, selon un principe d'isolation de type « masse-ressort ».

En outre, la partie supérieure présente des propriétés d'absorption acoustique, du fait que la coque n'est que partiellement imprégnée par la mousse, une partie de l'épaisseur de ladite coque restant poreuse.

La partie inférieure, quant à elle, présente uniquement des propriétés d'isolation acoustique liées à la présence de la couche étanche disposée sur la couche de ressort, toujours selon un principe d'isolation de type « masse-ressort ».

La couche étanche est généralement choisie pour présenter une masse surfacique importante, par exemple de l'ordre de 3000 à 4000 g/m², ceci afin d'apporter une isolation conséquente, notamment par l'incorporation d'une charge minérale dispersée au sein du matériau thermoplastique.

Pour la partie inférieure, il est inutile de disposer de propriétés d'absorption puisque cette dernière est usuellement destinée à être recouverte par un tapis pourvu d'une couche poreuse.

Par ailleurs, on connait un procédé de réalisation d'un tel panneau comprenant les étapes suivantes :
- prévoir un flan de feutre de masse surfacique sensiblement homogène, ledit feutre comprenant des fibres de structure et un liant activable à chaud,
- chauffer ledit flan à température d'activation du liant,
- disposer ledit flan dans un conformateur pourvu d'un poinçon et d'une matrice,
- comprimer ledit flan de manière à obtenir une coque thermoformée en feutre,
- disposer un format de couche étanche à base de matériau élastomère thermoplastique dans un moule dont le fond présente une première et une deuxième zone contigües, ledit format recouvrant ladite première zone en débordant sur ladite deuxième zone, ledit format ayant été préalablement chauffé à température de ramollissement dudit matériau, de manière à se conformer à la forme de ladite première zone,
- détourer ledit format sensiblement à l'interface entre lesdites zones, de manière à disposer d'un panneau présentant une bonne finition,
- disposer ladite coque dans ledit moule, ladite coque recouvrant ladite deuxième zone, ladite coque étant disposée sensiblement bord à bord avec ledit format détouré, ladite coque et ledit format détouré occupant l'intégralité dudit fond,
- injecter dans ledit moule un mélange précurseur de mousse élastiquement compressible - notamment en polyuréthanne - de manière à créer une couche de ressort surmoulant d'une part l'envers de ladite coque, en la pénétrant partiellement de manière à former une croûte d'interface étanche, et d'autre part l'envers dudit format détouré,
- démouler le panneau obtenu.

Un tel type de panneau et un tel procédé de fabrication présentent les inconvénients suivants :
- si l'on souhaite amoindrir la masse surfacique de la couche étanche en vue d'alléger le véhicule, à savoir par réduction de son épaisseur, se présente lors de son opération de conformation dans le moule un risque de « crevés » propice aux fuites de mousse, ceci dans les zones de fort étirement ; pour y remédier, il est envisageable de recouvrir la couche étanche avec un film d'étanchéité à haute capacité de déformation, mais cela a un impact en terme de complexification de la fabrication et donc de coût,
- le détourage du format de couche étanche à l'interface entre les zones est une opération à part entière qui complexifie la réalisation du panneau,
- la partie inférieure du panneau, susceptible d'être impactée par les pieds d'un passager en cas de collision du véhicule, présente une faible rigidité, conditionnée par celle de la couche étanche, ce qui est défavorable en terme de sécurité lorsque elle est disposée au-dessus de blocs d'absorption d'énergie, par exemple à base de polystyrène expansé ; en effet, cette faible rigidité ne permet pas de répartir sur l'ensemble du bloc la pression appliquée par la projection d'un pied de passager.

L'invention a pour but de pallier ces inconvénients.

A cet effet, et selon un premier aspect, l'invention propose un panneau insonorisant de tablier de véhicule automobile, ledit panneau comprenant :
- une coque à base d'une couche de feutre de masse surfacique sensiblement homogène, ledit feutre comprenant des fibres de structure liées par un liant activable à chaud, ladite coque étant thermoformée, ladite coque se divisant entre une zone supérieure destinée à recouvrir le haut dudit tablier et une zone inférieure destinée à recouvrir le bas dudit tablier, ladite zone inférieure étant comprimée par rapport à ladite zone supérieure de manière à présenter une rigidité accentuée,
- une couche étanche à base de matériau élastomère thermoplastique, ladite couche s'étendant sensiblement contre l'intégralité de l'envers de ladite zone inférieure en la pénétrant en surface pour assurer une cohésion entre elles,
- une couche de ressort à base de mousse élastiquement compressible surmoulant d'une part l'envers de ladite zone supérieure, en la pénétrant partiellement de manière à former une croûte d'interface étanche, et d'autre part l'envers de ladite couche étanche.

Dans cette description, les termes de positionnement dans l'espace (haut, bas, supérieur, inférieur, longitudinal, vertical,...) sont pris en référence au panneau disposé dans le véhicule.

Selon un deuxième aspect, l'invention propose un procédé de réalisation d'un tel panneau, ledit procédé comprenant les étapes suivantes :
- prévoir un flan de feutre de masse surfacique sensiblement homogène, ledit feutre comprenant des fibres de structure et un liant activable à chaud, ledit flan se divisant entre une zone supérieure et une zone inférieure,
- disposer sur ladite zone inférieure un format de couche étanche à base de matériau élastomère thermoplastique,
- chauffer ledit flan pourvu dudit format à une température permettant d'activer ledit liant et de ramollir ledit matériau,
- disposer ledit flan pourvu dudit format dans un conformateur pourvu d'un poinçon et d'une matrice,
- comprimer l'ensemble de manière à obtenir une coque thermoformée en feutre, ladite zone inférieure étant comprimée par rapport à ladite zone supérieure de manière à présenter une rigidité accentuée, ledit format se conformant à la forme de ladite coque pour donner ladite couche étanche et s'associant à ladite coque en la pénétrant en surface,
- disposer ladite coque pourvue de ladite couche étanche dans un moule,
- injecter dans ledit moule un mélange précurseur de mousse élastiquement compressible de manière à créer une couche de ressort surmoulant d'une part l'envers de ladite zone supérieure, en la pénétrant partiellement de manière à former une croûte d'interface étanche, et d'autre part l'envers dudit format,
- démouler le panneau obtenu.

Selon un troisième aspect, l'invention concerne une architecture d'une zone de tablier comprenant un tel panneau.

Avec l'agencement proposé, on résout les inconvénients des réalisations de l'art antérieur :
- si l'on souhaite amoindrir la masse surfacique de la couche étanche, en vue d'alléger le véhicule, le risque de « crevés » lors de son opération de conformation est écarté ; en effet, la couche étanche étant supportée par la coque, cette dernière « accompagne » le matériau élastomère thermoplastique de ladite couche dans les zones de fort étirement,
- le détourage du format de couche étanche à l'interface entre les zones supérieure et inférieure n'est plus utile puisque ladite couche est rendue invisible de par l'extension de la coque en zone inférieure,
- la zone inférieure, dans laquelle le feutre est comprimé, présente une rigidité accentuée, ce qui est favorable en termes de sécurité puisqu'on observe une répartition de la pression sur des blocs d'absorption destinés à recevoir en projection les pieds d'un passager ; accessoirement, le fait de comprimer le feutre en zone inférieure permet de gagner de l'espace pour le logement des pieds des passagers dans l'habitacle du véhicule.

Lorsque l'on dit que la coque « accompagne » le matériau élastomère thermoplastique de la couche étanche dans les zones de fort étirement, cela correspond au fait que les fibres de ladite coque réalisent un ancrage dudit matériau, ce qui empêche des déchirures brutales conduisant à des « crevés ».

La pénétration en surface de la coque par la couche étanche est simplement réalisée par le fait que cette dernière est chauffée à température de ramollissement, ce qui lui permet de s'accrocher à ladite coque par enrobage superficiel des fibres par le matériau élastomère thermoplastique.

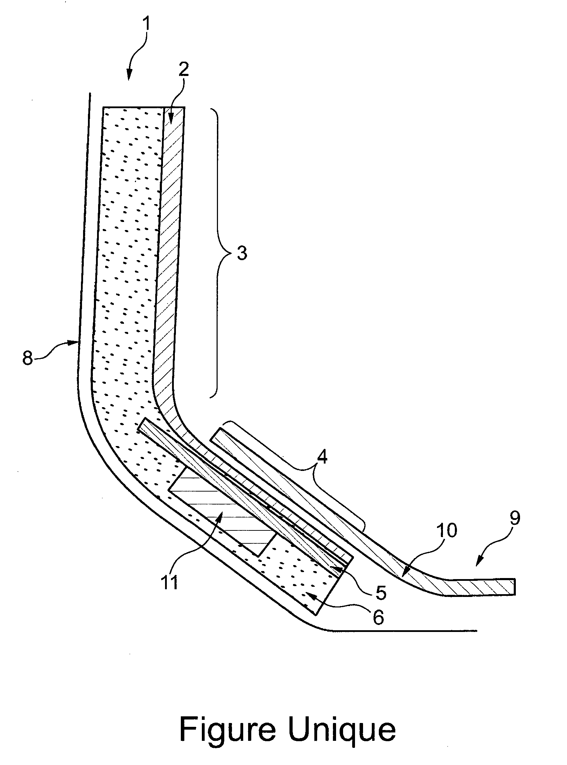

D'autres particularités et avantages de l'invention apparaîtront dans la description qui suit, faite en référence à la figure jointe qui est une vue schématique en coupe longitudinale verticale d'une architecture d'une zone de tablier comprenant un panneau selon l'invention.

En référence à la figure, on décrit un panneau 1 insonorisant de tablier de véhicule automobile, ledit panneau comprenant :
- une coque 2 à base d'une couche de feutre de masse surfacique sensiblement homogène, ledit feutre comprenant des fibres de structure liées par un liant activable à chaud, ladite coque étant thermoformée, ladite coque se divisant entre une zone supérieure 3 destinée à recouvrir le haut dudit tablier et une zone inférieure 4 destinée à recouvrir le bas dudit tablier, ladite zone inférieure étant comprimée par rapport à ladite zone supérieure de manière à présenter une rigidité accentuée,
- une couche étanche 5 à base de matériau élastomère thermoplastique, ladite couche s'étendant sensiblement contre l'intégralité de l'envers de ladite zone inférieure en la pénétrant en surface pour assurer une cohésion entre elles,
- une couche de ressort 6 à base de mousse élastiquement compressible - notamment de polyuréthanne - surmoulant d'une part l'envers de ladite zone supérieure, en la pénétrant partiellement de manière à former une croûte d'interface étanche, et d'autre part l'envers de ladite couche étanche.

Lorsque l'on parle de feutre de masse surfacique sensiblement homogène, il convient bien entendu de prendre en compte les dispersions observées sur ce type de matériau, qui peuvent par exemple être de l'ordre de ±10 %.

Le liant activable à chaud est notamment de nature thermoplastique ou thermodurcissable, tel qu'une résine phénolique.

Les fibres de structure sont par exemple des fibres synthétiques à point de fusion élevé, telles que des fibres en polyester, ou des fibres végétales, telles que du coton.

La couche étanche 5 est par exemple à base d'éthylène propylène diène monomère pourvue d'une charge minérale telle que de la baryte.

Selon une réalisation, la surface développée de la zone supérieure 3 représente entre 40 et 60 % de la surface développée totale de la coque 2.

Selon une réalisation, la coque 2 présente en zone non étirée une masse surfacique comprise entre 900 et 1700 g/m², étant notamment de l'ordre de 1200 g/m².

Selon une réalisation, la couche étanche 5 présente en zone non étirée une masse surfacique comprise entre 1400 et 2800 g/m², étant notamment de l'ordre de 1600 g/ m².

Selon une réalisation, la croûte d'interface présente une épaisseur moyenne inférieure à 25% de celle de la zone supérieure 3 de la coque 2.

Ainsi, la coque 2 présente dans sa zone supérieure 3 une portion d'épaisseur non pénétrée par la mousse qui reste poreuse, et donc apte à réaliser de l'absorption acoustique.

Selon une réalisation, la zone inférieure 4 est comprimée à une épaisseur inférieure à 4 mm, et notamment égale à 3 mm environ.

La zone supérieure 3 peut par exemple présenter quant à elle une épaisseur comprise entre 6 et 11 mm.

Selon la réalisation représentée, le panneau 1 comprend en outre au moins un bloc 11 d'absorption d'énergie - par exemple à base de polystyrène expansé-noyé dans la mousse de la couche de ressort 6 et disposé contre la couche étanche 5.

On décrit à présent un procédé de réalisation d'un tel panneau 1, ledit procédé comprenant les étapes suivantes :
- prévoir un flan de feutre de masse surfacique sensiblement homogène, ledit feutre comprenant des fibres de structure et un liant activable à chaud, ledit flan se divisant entre une zone supérieure 3 et une zone inférieure 4,
- disposer sur ladite zone inférieure un format de couche étanche 5 à base de matériau élastomère thermoplastique,
- chauffer ledit flan pourvu dudit format à une température permettant d'activer ledit liant et de ramollir ledit matériau,
- disposer ledit flan pourvu dudit format dans un conformateur pourvu d'un poinçon et d'une matrice,
- comprimer l'ensemble de manière à obtenir une coque 2 thermoformée en feutre, ladite zone inférieure étant comprimée par rapport à ladite zone supérieure de manière à présenter une rigidité accentuée, ledit format se conformant à la forme de ladite coque pour donner ladite couche étanche et s'associant à ladite coque en la pénétrant en surface,
- disposer ladite coque pourvue de ladite couche étanche dans un moule,
- injecter dans ledit moule un mélange précurseur de mousse élastiquement compressible de manière à créer une couche de ressort 6 surmoulant d'une part l'envers de ladite zone supérieure, en la pénétrant partiellement de manière à former une croûte d'interface étanche, et d'autre part l'envers dudit format,
- démouler le panneau 1 obtenu.

Après compression du flan de feutre, on peut prévoir une découpe périphérique permettant d'obtenir une coque 2 de géométrie optimale.

Selon une réalisation, le flan de feutre présente une masse surfacique comprise entre 900 et 1700 g/m², étant notamment de l'ordre de 1200 g/ m².

Selon une réalisation, le format de couche étanche 5 présente une masse surfacique comprise entre 1400 et 2800 g/m², étant notamment de l'ordre de 1600 g/m².

Selon une réalisation, la zone inférieure 4 est comprimée à une épaisseur inférieure à 4 mm, et notamment égale à 3 mm environ.

La zone supérieure 3 peut par exemple présenter quant à elle une épaisseur comprise entre 6 et 11 mm.

Selon une réalisation, le procédé comprend en outre l'étape de disposer sur la couche étanche 5, avant injection du mélange précurseur de mousse, au moins un bloc 11 d'absorption d'énergie, de manière à obtenir un panneau 1 pourvu dudit bloc noyé dans la mousse de la couche de ressort 6.

On décrit enfin une architecture d'une zone de tablier comprenant un panneau 1, ladite architecture comprenant en outre :
- une tôle 8 de tablier de séparation entre le moteur et l'habitacle du véhicule, la couche de ressort 6 dudit panneau s'appuyant contre ladite tôle de tablier,
- un tapis 9 de recouvrement disposé contre la zone inférieure 4 de la coque 2, ledit tapis comprenant une couche poreuse 10 supérieure d'absorption, notamment à base de fibres de tuft ou d'aiguilleté.

## Revendications

1. Panneau (1) insonorisant de tablier de véhicule automobile, ledit panneau comprenant :
• une coque (2) à base d'une couche de feutre de masse surfacique sensiblement homogène, ledit feutre comprenant des fibres de structure liées par un liant activable à chaud, ladite coque étant thermoformée, ladite coque se divisant entre une zone supérieure (3) destinée à recouvrir le haut dudit tablier et une zone inférieure (4) destinée à recouvrir le bas dudit tablier, ladite zone inférieure étant comprimée par rapport à ladite zone supérieure de manière à présenter une rigidité accentuée,
• une couche étanche (5) à base de matériau élastomère thermoplastique, ladite couche s'étendant sensiblement contre l'intégralité de l'envers de ladite zone inférieure en la pénétrant en surface pour assurer une cohésion entre elles,
• une couche de ressort (6) à base de mousse élastiquement compressible surmoulant d'une part l'envers de ladite zone supérieure, en la pénétrant partiellement de manière à former une croûte d'interface étanche, et d'autre part l'envers de ladite couche étanche.

2. Panneau selon la revendication 1, **caractérisé en ce que** la surface développée de la zone supérieure (3) représente entre 40 et 60 % de la surface développée totale de la coque (2).

3. Panneau selon l'une des revendications 1 ou 2, **caractérisé en ce que** la coque (2) présente en zone non étirée une masse surfacique comprise entre 900 et 1700 g/m², étant notamment de l'ordre de 1200 g/ m².

4. Panneau selon l'une quelconque des revendications 1 à 3, **caractérisé en ce que** la couche étanche (5) présente en zone non étirée une masse surfacique comprise entre 1400 et 2800 g/m², étant notamment de l'ordre de 1600 g/ m².

5. Panneau selon l'une quelconque des revendications 1 à 4, **caractérisé en ce que** la croûte d'interface présente une épaisseur moyenne inférieure à 25% de celle de la zone supérieure (3) de la coque (2).

6. Panneau selon l'une quelconque des revendications 1 à 5, **caractérisé en ce que** la zone inférieure (4) est comprimée à une épaisseur inférieure à 4 mm, et notamment égale à 3 mm environ.

7. Panneau selon l'une quelconque des revendications 1 à 6, **caractérisé en ce qu'**il comprend en outre au moins un bloc (11) d'absorption d'énergie noyé dans la mousse de la couche de ressort (6) et disposé contre la couche étanche (5).

8. Procédé de réalisation d'un panneau selon l'une quelconque des revendications 1 à 7, **caractérisé en ce qu'**il comprend les étapes suivantes :
• prévoir un flan de feutre de masse surfacique sensiblement homogène, ledit feutre comprenant des fibres de structure et un liant activable à chaud, ledit flan se divisant entre une zone supérieure (3) et une zone inférieure (4),
• disposer sur ladite zone inférieure un format de couche étanche (5) à base de matériau élastomère thermoplastique,
• chauffer ledit flan pourvu dudit format à une température permettant d'activer ledit liant et de ramollir ledit matériau,
• disposer ledit flan pourvu dudit format dans un conformateur pourvu d'un poinçon et d'une matrice,
• comprimer l'ensemble de manière à obtenir une coque (2) thermoformée en feutre, ladite zone inférieure étant comprimée par rapport à ladite zone supérieure de manière à présenter une rigidité accentuée, ledit format se conformant à la forme de ladite coque pour donner ladite couche étanche et s'associant à ladite coque en la pénétrant en surface,
• disposer ladite coque pourvue de ladite couche étanche dans un moule,
• injecter dans ledit moule un mélange précurseur de mousse élastiquement compressible de manière à créer une couche de ressort (6) surmoulant d'une part l'envers de ladite zone supérieure, en la pénétrant partiellement de manière à former une croûte d'interface étanche, et d'autre part l'envers dudit format,
• démouler le panneau (1) obtenu.

9. Procédé selon la revendication 8, **caractérisé en ce qu'**il comprend en outre l'étape de disposer sur la couche étanche (5), avant injection du mélange précurseur de mousse, au moins un bloc (11) d'absorption d'énergie, de manière à obtenir un panneau (1) pourvu dudit bloc noyé dans la mousse de la couche de ressort (6).

10. Architecture d'une zone de tablier comprenant un panneau selon l'une quelconque des revendications 1 à 7, ladite architecture comprenant en outre :
• une tôle (8) de tablier de séparation entre le moteur et l'habitacle du véhicule, la couche de ressort (6) dudit panneau s'appuyant contre ladite tôle de tablier,
• un tapis (9) de recouvrement disposé contre la zone inférieure (4) de la coque (2), ledit tapis comprenant une couche poreuse (10) supérieure d'absorption.

## Patentansprüche

1. Geräuschdämmplatte (1) für eine Spritzwand eines Kraftfahrzeugs, wobei die Platte Folgendes umfasst:
- eine Schale (2) basierend auf einer Filzschicht mit einem in etwa homogenen Flächengewicht, wobei der besagte Filz Strukturfasern umfasst, die durch ein wärmeaktivierbares Bindemittel verbunden sind, wobei die besagte Schale warmgeformt ist, wobei sich die besagte Schale in eine obere Zone (3), die dazu bestimmt ist, die Oberseite der besagten Spritzwand abzudecken und eine untere Zone (4) unterteilt, die dazu bestimmt ist, die Unterseite der Spritzwand abzudecken, wobei die besagte untere Zone im Verhältnis zur besagten oberen Zone verdichtet ist, um eine verstärkte Steifigkeit aufzuweisen,
- eine Abdichtungsschicht (5) basierend auf einem thermoplastischen Elastomer-Werkstoff, wobei sich die besagte Schicht in etwa an der gesamten Rückseite der besagten unteren Zone erstreckt, indem sie an der Oberfläche in diese eindringt, um für einen Zusammenhalt zwischen diesen zu sorgen,
- eine Federungsschicht (6) basierend auf einem elastisch verdichtbaren Schaumstoff, die einerseits die Rückseite der besagten oberen Zone überformt, indem sie teilweise in diese eindringt, um eine dichte Schnittstellenkruste zu bilden, und andererseits die Rückseite der besagten Abdichtungsschicht überformt.

2. Platte nach Anspruch 1, **dadurch gekennzeichnet, dass** die ausgestaltete Fläche der oberen Zone (3) zwischen 40 und 60% der ausgestalteten Gesamtfläche der Schale (2) darstellt.

3. Platte nach einem der Ansprüche 1 oder 2, **dadurch gekennzeichnet, dass** die Schale (2) in der nicht gezogenen Zone ein Flächengewicht zwischen 900 und 1700 g/m² aufweist, und vor allem im Bereich von 1200 g/m² liegt.

4. Platte nach einem der Ansprüche 1 bis 3, **dadurch gekennzeichnet, dass** die Abdichtungsschicht (5) in der nicht gezogenen Zone ein Flächengewicht zwischen 1400 und 2800 g/m² aufweist, und vor allem im Bereich von 1600 g/m² liegt.

5. Platte nach einem der Ansprüche 1 bis 4, **dadurch gekennzeichnet, dass** die Schnittstellenkruste eine durchschnittliche Stärke von weniger als 25% von jener der oberen Zone (3) der Schale (2) aufweist.

6. Platte nach einem der Ansprüche 1 bis 5, **dadurch gekennzeichnet, dass** die untere Zone (4) auf eine Stärke von weniger als 4 mm, und vor allem gleich etwa 3 mm verdichtet ist.

7. Platte nach einem der Ansprüche 1 bis 6, **dadurch gekennzeichnet, dass** sie darüber hinaus zumindest einen Block (11) zum Absorbieren von Energie umfasst, der in den Schaumstoff der Federungsschicht (6) eingelassen ist, und an der Abdichtungsschicht (5) angeordnet ist.

8. Verfahren zum Erzeugen einer Platte nach einem der Ansprüche 1 bis 7, **dadurch gekennzeichnet, dass** es die folgenden Schritte umfasst:
- Vorsehen eines Filzzuschnitts mit einem in etwa homogenen Flächengewicht, wobei der besagte Filz Strukturfasern umfasst, die durch ein wärmeaktivierbares Bindemittel verbunden sind, wobei sich der besagte Zuschnitt in eine obere Zone (3) und eine untere Zone (4) unterteilt,
- Anordnen auf der besagten unteren Zone eines Abdichtungsschichtformats (5) basierend auf einem thermoplastischen Elastomer-Werkstoff,
- Erwärmen des besagten Zuschnitts, der mit dem besagten Format versehen ist, auf eine Temperatur, die es ermöglicht, das besagte Bindemittel zu aktivieren, und den besagten Werkstoff aufzuweichen,
- Anordnen des besagten Zuschnitts, der mit dem besagten Format versehen ist, in einer Formvorrichtung, die mit einer Stanze und einer Matrize versehen ist,
- Verdichten der Einheit, um eine warmgeformte Schale (2) aus Filz zu erhalten, wobei die besagte untere Zone im Verhältnis zur besagten oberen Zone verdichtet wird, um eine verstärkte Steifigkeit aufzuweisen, wobei sich das besagte Format an die Form der besagten Schale anpasst, um die besagte Abdichtungsschicht zu ergeben und es sich mit der besagten Schale verbindet, indem es an der Oberfläche eindringt,
- Anordnen der besagten Schale, die mit der besagten Abdichtungsschicht versehen ist, in einer Form,
- Einspritzen in die besagte Form eines Vorstufengemisches für elastisch verdichtbaren Schaumstoff um eine Federungsschicht (6) zu kreieren, die einerseits die Rückseite der besagten oberen Zone überformt, indem sie teilweise in diese eindringt, um eine dichte Schnittstellenkruste zu bilden, und sie andererseits die Rückseite des besagten Formats überformt,
- Entformen der erhaltenen Platte (1).

9. Verfahren nach Anspruch 8, **dadurch gekennzeichnet, dass** es darüber hinaus den Schritt des Anordnens auf der Abdichtungsschicht (5), vor dem Einspritzen des Vorstufengemisches für Schaumstoff, zumindest eines Blocks (11) zum Absorbieren von Energie umfasst, um eine Platte (1) zu erhalten, die mit dem besagten Block versehen ist, der in den Schaumstoff der Federungsschicht (6) eingelassen ist.

10. Architektur einer Spritzwandzone, eine Platte nach einem der Ansprüche 1 bis 7 umfassend, wobei die besagte Architektur darüber hinaus Folgendes umfasst:
- ein Spritzwandblech (8) zur Trennung zwischen dem Motor und der Fahrgastzelle des Fahrzeugs, wobei sich die Federungsschicht (6) der besagten Platte am besagten Spritzwandblech anlegt,
- einen Überzugsteppich (9), der an der unteren Zone (4) der Schale (2) angelegt ist, wobei der besagte Teppich eine obere poröse Absorptionsschicht (10) umfasst.

## Claims

1. Soundproofing panel (1) for the firewall of a motor vehicle, said panel comprising:
- a shell (2) based on a layer of felt with a substantially homogenous surface density, said felt comprising structural fibres connected by a hot-activatable binder, said shell being thermoformed, said shell being divided between a top zone (3) intended to cover the top of said firewall and a bottom zone (4) intended to cover the bottom of said firewall, said bottom zone being compressed with respect to said top zone so as to have accentuated rigidity,
- an impervious layer (5) based on thermoplastic elastomer material, said layer lying substantially against the whole of the reverse side of said bottom zone while penetrating it on the surface in order to provide cohesion between them,
- a spring layer (6) based in elastically compressible foam moulded firstly onto the reverse side of said top zone, penetrating it partially so as to form a sealed interface crust, and secondly the reverse side of said impervious layer.

2. Panel according to claim 1, **characterised in that** the developed surface of the top zone (3) represents between 40% and 60% of the total developed surface of the shell (2).

3. Panel according to one of claims 1 or 2, **characterised in that** the shell (2) has an unstretched zone with a surface density of between 900 and 1700 g/m², being in particular around 1200 g/m².

4. Panel according to any of claims 1 to 3, **characterised in that** the impervious layer (5) has, in the unstretched zone, a surface density of between 1400 and 2800 g/m², being in particular around 1600 g/m².

5. Panel according to any of claims 1 to 4, **characterised in that** the interface crust has a mean thickness of less than 25% of that of the top zone (3) of the shell (2).

6. Panel according to any of claims 1 to 5, **characterised in that** the bottom zone (4) is compressed to a thickness of less than 4 mm, and in particular equal to approximately 3 mm.

7. Panel according to any of claims 1 to 6, **characterised in that** it further comprises at least one energy-absorption block (11) embedded in the foam of the spring layer (6) and disposed against the impervious layer (5).

8. Method for producing a panel according to any of claims 1 to 7, **characterised in that** it comprises the following steps:
- providing a felt blank with a substantially homogeneous surface density, said felt comprising structural fibres and a hot-activatable binder, said blank being divided between a top zone (3) and a bottom zone (4),
- disposing on said bottom zone an impervious layer format (5) based on thermoplastic elastomer material,
- heating said blank provided with said format to a temperature enabling said binder to be activated and said material to be softened,
- disposing said blank provided with said format in a shaper provided with a punch and a die,
- compressing the assembly so as to obtain a thermoformed felt shell (2), said bottom zone being compressed with respect to said top zone so as to have accentuated rigidity, said format being shaped to the form of said shell in order to give said impervious layer and being associated with said shell by penetrating it on the surface,
- disposing said shell provided with said impervious layer in a mould,
- injecting into said mould a precursor mixture of elastically compressible foam so as to create a spring layer (6) moulded firstly onto the reverse side of said top zone, penetrating it partially so as to form an impervious interface crust, and secondly onto the reverse side of said format,
- removing from the mould the panel (1) obtained.

9. Method according to claim 8, **characterised in that** it further comprises the step of disposing on the impervious layer (5), before injection of the precursor foam mixture, at least one energy-absorption block (11), so as to obtain a panel (1) provided with said block embedded in the foam of the spring layer (6).

10. Architecture of a firewall zone comprising a panel according to any of claims 1 to 7, said architecture further comprising:
- a firewall metal sheet (8) for separation between the engine and the passenger compartment of the vehicle, the spring layer (6) of said panel bearing against said firewall metal sheet,
- a covering mat (9) disposed against the bottom zone (4) of the shell (2), said mat comprising a top porous absorption layer (10).
